Europäisches Patentamt

European Patent Office

Office européen des brevets

(19)

(11) Veröffentlichungsnummer : **0 542 815 B1**

(12) **EUROPÄISCHE PATENTSCHRIFT**

(51) Int. Cl.⁵ : **C04B 35/48, B23B 27/14**

(45) Veröffentlichungstag der Patentschrift :
03.08.94 Patentblatt 94/31

(21) Anmeldenummer : **91914130.9**

(22) Anmeldetag : **05.08.91**

(86) Internationale Anmeldenummer :
**PCT/EP91/01473**

(87) Internationale Veröffentlichungsnummer :
**WO 92/02470 20.02.92 Gazette 92/05**

(54) SINTERFORMKÖRPER UND SEINE VERWENDUNG.

(30) Priorität : 06.08.90 DE 4024877
16.05.91 DE 4116008

(43) Veröffentlichungstag der Anmeldung :
26.05.93 Patentblatt 93/21

(45) Bekanntmachung des Hinweises auf die
Patenterteilung :
03.08.94 Patentblatt 94/31

(84) Benannte Vertragsstaaten :
**AT BE CH DE ES FR GB IT LI NL SE**

(56) Entgegenhaltungen :
EP-A- 0 019 335
EP-A- 0 199 459
EP-A- 0 284 584
EP-A- 0 300 716
EP-A- 0 443 624
WO-A-85/01936
WO-A-90/11980
Journal of Materials Science, vol. 23, no. 5,
May 1988, T. Arahori et al.: "Microstructure
and mechanical properties of A1203-Cr203-Z-
r02 composites", pages 1605-1609, see the
whole document
World Patents Index Latest Accession number
90-196803 [week 9026] 17 May 1990, Derwent
Publications Ltd, London GB; & JP, A, 2129066
(NIPPON SHOKUBAI KAGAKU) 17 May 1990,
see the whole document

(73) Patentinhaber : **CERASIV GmbH
INNOVATIVES KERAMIK-ENGINEERING
Fabrikstrasse 23-29
D-73207 Plochingen (DE)**

(72) Erfinder : **BURGER, Wolfgang
Mühlhaldenweg 75
D-7310 Plochingen (DE)**
Erfinder : **GERNSHEIMER, Stefan
Unterdorfstr. 18
D-7316 Köngen (DE)**
Erfinder : **ANDERSCH, Hans
Struttweg 12
D-7326 Heiningen (DE)**
Erfinder : **FRIEDERICH, Kilian
Talweg 34
D-7310 Plochingen (DE)**
Erfinder : **LEHMANN, Siegbert
Beethovenstr. 40
D-7310 Plochingen (DE)**
Erfinder : **SCHNEIDER, Johannes
Steigäckerstr. 4
D-7311 Hochdorf (DE)**
Erfinder : **FRIPAN, Michael
Südstr. 19
D-7150 Backnang (DE)**

(74) Vertreter : **Schulz, Wilfried et al
Dynamit Nobel AG
Abt.Patente und Dokumentation
D-53839 Troisdorf (DE)**

EP 0 542 815 B1

## Beschreibung

In der DE-A-36 08 854 ist die Verwendung eines Oxidkeramik-Werkstoffes für Preßwerkzeuge zum Ausformen von Bauteilen aus Glas oder glashaltiger Keramik angegeben. Als Matrixwerkstoffe werden neben kubischem und tetragonalem Zirkoniumdioxid auch Aluminiumoxid, Chromoxid, Spinell und ein hinsichtlich seiner mengenmäßigen Zusammensetzung nicht definiertes Al-Cr-Mischoxid $[Al, Cr]_2O_3$ angegeben. Die einzelnen Vorschläge für die Matrixkomponenten stehen dabei gleichberechtigt nebeneinander, so daß zur Auswahl einer besonderen Matrixkomponente wie auch zum Anteil der in die Matrix einzulagernden Menge an z. B. Zirkoniumdioxid keine Lehre vermittelt wird. Neben den vorstehend genannten Komponenten können noch stabilisierende Oxide wie z.B. Yttriumoxid $(Y_2O_3)$ in einer Menge von 3,5 bis 12, vorzugsweise 8 bis 10 oder Magnesiumoxid (MgO) in einer Menge von 6,0 bis 16, vorzugsweise 8 bis 14 Mol.% und Ceroxid $(CeO_2)$ in einer Menge von 3,5 bis 12 Mol.%, vorzugsweise von 8 bis 10 Mol.%, bezogen auf den Oxidkeramik-Werkstoff, vorliegen. Als Partikelgröße für die in eine polykristalline Matrix eingelagerten Teilchen wird eine Größe zwischen 5 und 5000 nm entsprechend 0,005 bis 5 μm genannt.

Ein weiterer Vorschlag zu einer sogenannten "umwandlungsverstärkten" Keramikzusammensetzung, bei der eine feinverteilte feste Lösung aus $ZrO_2$-$HfO_2$ in einer festen Lösung aus entweder Chromoxid enthaltendem Aluminiumoxid oder Chromoxid enthaltendem Mullit angegeben ist, findet sich in der WO 85/01936 und wird dort für Hochtemperaturanwendungsbereiche, wie z.B. für Dieselmotoren und Gasturbinen vorgeschlagen. Der in Erwägung gezogene Chromoxidanteil zwischen 3 und 30 Mol.%, insbesondere ein Anteil von 20 Mol.% Chromoxid im Zusammenwirken mit einem Anteil von 10 bis 20 Mol.% Hafniumdioxid, soll zur Verbesserung der Härte und zur Einstellung einer niedrigen Wärmeleitfähigkeit dienen. Steigende Anteile an Chrom- und Hafniumdioxid führen zu einer Abnahme der Wärmeleitfähigkeit. Merkliche Härtesteigerungen werden erst bei relativ hohen Chromoxid-Konzentrationen gefunden - ca. 20 Mol.%, bezogen auf 20 Mol.% $HfO_2$. Zu der Korngröße der eingelagerten $ZrO_2$-$HfO_2$-Phase wird in den Beispielen dieser Schrift eine Größenordnung von 5 μm angegeben, und der Nichterhalt der tetragonalen Modifikation darauf zurückgeführt, daß es nicht gelungen ist, die dispergierte $ZrO_2$-$HfO_2$-feste Lösung in ausreichender Feinheit zu erhalten. Der Zusatz stabilisierender Oxide ist in dieser Schrift nicht erwähnt. Die erzielten Bruchzähigkeitswerte liegen im Bereich zwischen 5 und ca. 6,5 MPa √ m.

Die EP-A- 199 459 betrifft keramische Zusammensetzungen hoher Zähigkeit und sieht ein Zusammenwirken von Zirkoniumdioxid, teilstabilisiertem Zirkoniumdioxid, festen Lösungen von Zirkoniumdioxid/Hafniumdioxid, festen Lösungen von teilstabilisiertem Zirkoniumdioxid/Hafniumdioxid, teilstabilisiertem Hafniumdioxid und Hafniumdioxid mit Mischungen von Metalloxiden, insbesondere von Yttriumnioboxid $(YNbO_4)$ oder Yttriumtantaloxid $(YTaO_4)$ vor, wobei das Yttriumion der Mischoxide auch zum Teil durch ein Kation eines SE-Metalls, z B. La $^{+3}$, Ce $^{+4}$ Ce $^{+3}$ Pr $^{+2}$, Tm $^{+3}$ ersetzt ist. Gemäß einer weiteren Variante dieser Schrift kann die beschriebene keramische Legierung, also z.B. $ZrO_2$ unter Zusatz von $YNbO_4$ in einer Menge von wenigstens 5 Vol.% mit z.B. α-Aluminiumoxid oder auch $Al_2O_3$-$Cr_2O_3$, Mullit oder Titaniumcarbid, abgemischt werden. Der Nachteil dieser bekannten Zusammensetzung ist darin zu sehen, daß in Folge der Nb oder Ta enthaltenden Mischoxide bei den hergestellten Keramikprodukten eine weitere Korngrenzenphase entsteht und sich ein für viele Anwendungsbereiche noch nicht ausreichend hoher Erweichungspunkt einstellt.

In ähnlicher Weise beschreibt die US-PS 47 70 673 ein keramisches Schneidwerkzeug, das zu 20 bis 45 % aus einer 1 bis 4 Mol.% eines gemischten Metalloxids enthaltenden Zirkoniumdioxid-Legierung und 55 bis 80 Gew.% einer Hartkeramik-Zusammensetzung besteht, wobei die gemischten Metalloxide aus der Gruppe $YNbO_4$, $YTaO_4$, $MNbO_4$, $MTaO_4$ und deren Mischungen bestehen, und M aus einem Kation besteht, das zur Substitution des Yttriumkations vorgesehen ist und aus $Mg^{+2}$, $Ca^{+2}$, $Sc^{+3}$ und Seltenerdmetallionen ausgewählt ist, bestehend aus der Gruppe $La^{+3}$, $Ce^{+4}$, $Ce^{+3}$, $Pr^{+3}$, $Nd^{+3}$, $Sm^{+3}$, $Eu^{+3}$, $Gd^{+3}$, $Tb^{+3}$, $Dy^{+3}$, $Ho^{+3}$, $Er^{+3}$, $Tm^{+3}$, und $Lu^{+3}$ und deren Mischungen besteht. Als Hartkeramik kommt neben Aluminiumoxid und z.B. Sialon, SiC, $Si_3N_4$ auch $Al_2O_3$-$Cr_2O_3$ in Betracht, wobei ein $Cr_2O_3$-Anteil bis zu ungefähr 5 Mol.% vorgesehen ist. Auch hier besteht wiederum der Nachteil, daß sich durch die dem $ZrO_2$ zugefügten Legierungsbestandteile in Form der Niob bzw. Tantal enthaltenden Mischoxide in der Keramik ein zu niedriger Erweichungsbereich ergibt.

Die US-PS 43 16 964 betrifft eine auch zur Herstellung von Schneidplatten in Erwägung gezogene Zusammensetzung aus 95 - 5 Vol.% Aluminiumoxid und 5 - 95 Vol.% Zirkoniumdioxid unter Zusatz von ca. 0,5 - 5,5 Mol.% Yttriumoxid, 0,5 bis 10 Mol.% Ceroxid, 0,4 bis 4 Mol.% Erbiumoxid und 0,5 bis 5 Mol.% Lanthanoxid, bezogen auf Zirkoniumdioxid.

Ein gemäß der EP-A-282 879 auch zur Verwendung als Schneidplatte vorgesehener Sinterformkörper besteht aus einer Whisker enthaltenden Matrix, die außerdem noch Partikel aus z. B. Siliziumkarbid, Siliziumnitrid, Sialon, Aluminiumoxid und Zirkoniumdioxid enthält. Die Whisker können aus den gleichen Werkstoffen wie die Partikel bestehen. Zirkoniumdioxid wird hier neben Mullit und Aluminiumoxid als Matrixwerkstoff genannt. Außerdem kann der Sinterformkörper noch die üblichen Sinterhilfsmittel enthalten, wie z. B. die Oxide des Magnesiums, Chroms oder Yttriums. Von den seltenen Erdoxiden werden als bevorzugt geeignet die Oxide des Lanthans, Samariums, Gadoliniums, Dysprosiums, Holmiums, Erbiums, Thuliums, Ytterbiums und Lutetiums genannt. Es werden Bruchzähigkeiten von mehr als 10 MPam$^{1/2}$ angegeben.

Eine Keramik sehr hoher Zähigkeit und Verschleißfestigkeit zur Verwendung als spanabhebendes Schneidwerkzeug ist aus der DE-A-35 29 265 bekannt. Die stoffliche Zusammensetzung sieht neben 20 bis 50 Gew.% Titankarbid und 18 bis 79,9 Gew.% Aluminiumoxid 0,1 bis 2 Gew.% eines Sinterhilfsmittels vor, das aus der Gruppe: MgO, CaO, SiO$_2$, ZrO$_2$, NiO, Th$_2$O$_3$, AlN, TiO, TiO$_2$, Cr$_2$O$_3$ und/oder zumindestens einem Oxid der seltenen Erden ausgewählt ist. Als seltene Erdoxide werden genannt: Y$_2$O$_3$, Dy$_2$O$_3$, Er$_2$O$_3$, Ho$_2$O$_3$, Gd$_2$O$_3$ und/oder Tb$_4$O$_7$. Die Sinterhilfsmittel dienen zur Verhinderung des Kornwachstums beim Aluminiumoxid und gehen mit diesem eine Verbindung ein, die den Sintervorgang der Keramik fördert.

Aus der EP-A-214 291 ist ein zu 40 bis 99 Mol.% teilstabilisiertes Zirkoniumdioxid und 1 bis 60 Mol.% Aluminiumoxid enthaltender Sinterkörper bekannt, der als Sinterhilfsmittel ferner geringe Mengen der Oxide von Mn, Fe, Co, Ni, Cu und Zn zur Beschleunigung des Sintervorganges enthält. Zur Einstellung eines tetragonalen Phasenanteils von 65 % oder mehr werden die Oxide des Yttriums, Magnesiums, Calciums oder Cers vorgeschlagen. Als zuzusetzende Menge des Yttriumoxids werden 1,3 bis 4 Mol.% genannt, die ganz oder teilweise durch die übrigen stabilisierenden Oxide in einer Menge von 0,01 bis 12 Mol.% ersetzt sein können.

In der EP-A-236 507 ist ein Zirkoniumdioxid mit mehr als 65 % tetragonaler Phase angegeben, das in einem zu 60 bis 99 Mol.% aus Aluminiumoxid bestehenden hochdichten Keramikkörper enthalten ist. Zur Stabilisierung des Zirkoniumoxids werden weniger als 3 Mol.% Y$_2$O$_3$, weniger als 12 Mol.% MgO oder CaO und weniger als 14 Mol.% CeO$_2$, bezogen auf die keramische Zusammensetzung, vorgeschlagen. Zur Verbesserung der Sinterfähigkeit und zur Unterdrückung des Kornwachstums und damit zur Erzielung einer besonders hohen Dichte enthält der Werkstoff noch Übergangsmetalloxide von Mn, Fe, Co, Ni, Cu und Zn, die als solche oder als Hydroxide, Nitrate, Chloride u. ä. der Ausgangszusammensetzung zugegeben werden können. Nachteilig bei diesem bekannten Material ist die für viele Anwendungsbereiche, insbesondere bei Schneidwerkzeugen für die spanabhebende Bearbeitung noch nicht ausreichende Härte von max. 1.750 kg/mm$^2$.

Der Zusatz von Chromoxid zu Aluminiumoxid, wobei mindestens 10 Gew.% Chromoxid zum Einsatz kommen, wurde für die Herstellung eines feuerfesten Materials in der US-A-4 823 359 vorgeschlagen. Alternativ kann statt des Aluminiumoxids auch eine aus Aluminiumoxid/Zirkoniumdioxid bestehende Mischung zum Einsatz kommen. Aus der bis zu 50 μm zugelassenen Größe der Körner vor dem Sintern ist auf die für Feuerfestartikel gewünschte relativ hohe Porosität und eine geringe Bruchzähigkeit zu schließen. Die Verwendung von stabilisierenden Oxiden und das Vorliegen des ggf. eingesetzten Zirkoniumdioxids in einer bestimmten Modifikation ist nicht erwähnt. Auch gemäß der US-A-4 792 538 wird Chromoxid zusammen mit Aluminiumoxid und Zirkoniumdioxid zur Herstellung von Feuerfestartikeln eingesetzt. Die Chromoxidmenge liegt hier bei 5 bis 25 Gew.%, vorzugsweise werden 16 Gew.% eingesetzt. Die Porosität liegt hier im Bereich von ca. 14 bis 15 %, der Zusatz von stabilisierenden Oxiden und das Vorliegen des Zirkoniumdioxids in einer bestimmten Modifikation ist nicht angesprochen.

Die WO 90/11980 betrifft eine Keramik, in der plättchenförmige Körner aus Strontiumaluminat in einem molaren Verhältnis von SrO/Al$_2$O$_3$ zwischen 0,02 und 0,2 in eine Matrix aus ZrO$_2$, Al$_2$O$_3$ oder eine überwiegend aus ZrO$_2$ bestehende Mischung aus Al$_2$O$_3$ und ZrO$_2$ eingelagert sind. Die erreichten Härtewerte sind auch bei höheren Aluminiumoxidanteilen relativ niedrig.

Die EP-A-O 284 584 betrifft einen Sinterformkörper mit einem Anteil von Hartstoffen in Form von Körnern oder Fasern in einer Menge von 5 bis 50 Gew.%. Als geeignete Hartstoffe werden die Karbide, Nitride oder Boride der Gruppe IVb bis VIb des PSE angegeben. Die genannten Hartstoffe liegen neben Zirkoniumdioxid, für das eine Zugabemenge von 2 bis 16 Gew.% vorgeschlagen wird und Chromoxid in einer Menge von 1 bis 20 Gew.% vor. Das Zirkoniumdioxid soll zu mehr als 70 % in der tetragonalen Modifikation vorliegen. über die Zugabe von stabilisierenden Oxiden für das Zirkoniumdioxid und dessen Korngröße enthält die Schrift keine Angaben.

Die EP-A-0 300 716 betrifft eine Keramik-Zusammensetzung, die im wesentlichen aus 6 bis 95 Gew.% Zirkoniumdioxid und 5 bis 94 Gew.% einer Matrix, gebildet aus einem Aluminiumoxid-/Chromoxid-Mischkristall mit einem Chromoxidanteil von bis zu 50 Mol.%, bezogen auf Aluminiumoxid, besteht. Das Zirkoniumdioxid liegt teils in der monoklinen, teils in der tetragonalen Modifikation vor.

Es besteht nach wie vor die Aufgabe, die bekannten Werkstoffe zu verbessern und Sinterformkörper zur Verfügung zu stellen, die ein hohes Festigkeitsniveau aufweisen und bei denen eine gute Bruchzähigkeit mit gleichzeitig hoher Härte kombiniert ist. Die Erfindung will einen Sinterformkörper zur Verfügung stellen, der diese Anforderungen erfüllt und infolge seines Eigenschaftsspektrums über eine höhere Verschleißfestigkeit verfügt, so daß der Sinterformkörper als Schneidwerkzeug, insbesondere als Schneidplatte, ganz besonders als Schneidplatte für die spanabhebende Bearbeitung von Guß- und Stahlwerkstoffen geeignet ist, wobei eine weitere Aufgabe darin gesehen wird, einen Sinterformkörper vorzuschlagen, der als Schneidplatte im unterbrochenen Schnitt eingesetzt werden kann.

Es wurde nun gefunden, daß die Lösung der anstehenden Aufgabe einen Sinterformkörper mit einer ganz speziellen Zusammensetzung erfordert. Neben der Umwandlungsverstärkung, die durch die Einlagerung eines stabilisierende Oxide enthaltenden Zirkoniumdioxids in einer Keramikmatrix erzielt wird, sieht die Erfindung gemäß einer ersten Ausführungsform als Matrix einen Mischkristall aus Aluminiumoxid/Chromoxid vor. Desweiteren sieht die Erfindung vor, daß das in die Matrix eingelagerte Zirkoniumdioxid und das zusammen mit dem Aluminiumoxid den Mischkristall bildende Chromoxid in einem bestimmten molaren Verhältnis zueinander stehen. Diese Maßnahme ermöglicht erstmalig, daß auch bei höheren Zirkoniumdioxidanteilen, die zum Erhalt einer besonders guten Bruchzähigkeit erforderlich sein können, Härtewerte erzielt werden, wie sie bei entsprechenden Zirkoniumdioxidanteilen bisher nicht erzielbar waren. Andererseits können bei niedrigen Zirkoniumdioxidanteilen auch relativ geringe Chromoxidgehalte vorliegen, womit einer Versprödung des Werkstoffes entgegengewirkt wird. Gemäß ihrer ersten Ausführungsform sieht die Erfindung daher zur Lösung des anstehenden Problems einen Sinterwerkstoff nach Anspruch 1 vor.

Die Angabe, daß das die stabilisierenden Oxide enthaltende Zirkoniumdioxid und Chromoxid in einem bestimmten molaren Verhältnis vorliegen sollen, ergibt zwangsläufig auch bestimmte Verhältnisse für die übrigen Komponenten, da z. B. mit sinkendem Anteil an Zirkoniumdioxid auch die Anteile der stabilisierenden Oxide, bezogen auf den Sinterformkörper, abnehmen, während andererseits der Anteil des Aluminiumoxids ansteigt. Bezogen auf das Aluminiumoxid des Sinterformkörpers liegt das Chromoxid in einer Gewichtsmenge von 0,004 bis 6,57 Gew.% vor, wobei jedoch nicht außer acht gelassen werden darf, daß Chromoxid und das die stabilisierenden Oxide enthaltende Zirkoniumdioxid in dem angegebenen molaren Verhältnis stehen. Von den stabilisierenden Oxiden hat sich das Ceroxid als ganz besonders bevorzugt erwiesen.

Entsprechend einer weiteren vorteilhaften Ausführungsform beträgt der Anteil des Matrixwerkstoffes am Sinterformkörper mindestens 70 Vol.% und ist aus einem Aluminiumoxid-/Chromoxid-Mischkristall mit einem Chromoxidanteil von 0,01 bis 2,32 Gew.%, bezogen auf Aluminiumoxid, gebildet, wobei 2 bis 30 Vol.% Zirkoniumdioxid in die Matrix eingelagert sind, und das Zirkoniumdioxid 0,27 bis 2,85 Mol.% Yttriumoxid, bezogen auf die Mischung aus Zirkoniumdioxid und Yttriumoxid, enthält und das Zirkoniumdioxid in einer 2 μm nicht überschreitenden durchschnittlichen Korngröße überwiegend in der tetragonalen Modifikation vorliegt. Eine Menge von 0,27 bis 2,85 Mol.% Yttriumoxid, bezogen auf die Mischung aus Zirkoniumdioxid und Yttriumoxid entspricht 0,5 bis 5,4 Gew.% Yttriumoxid, bezogen auf Zirkoniumdioxid. Bei einem solchen Sinterformkörper liegt vorzugsweise zwischen dem das Yttriumoxid enthaltenden Zirkoniumdioxid und Chromoxid ein molares Verhältnis von 370 : 1 bis 34 : 1 vor.

Gemäß einer weiteren besonders bevorzugten Ausführungsform der Erfindung besteht der Sinterformkörper aus 60 bis 98 Vol. % eines Matrixwerkstoffes, wobei dieser zu 67,1 bis 99,2 Vol.% aus einem Aluminiumoxid-/Chromoxid-Mischkristall und zu 0,8 bis 32,9 Vol.% aus einem weiteren Mischkristall der Formel $SrAl_{12-x}Cr_xO_{19}$ besteht, wobei x einen Wert von 0,0007 bis 0,045 hat. Auch bei dieser Ausführungsform, die im übrigen der ersten Ausführungsform entspricht, geht von dem in die Mischkristall-Matrix eingelagerten Zirkoniumdioxid eine zähigkeitssteigernde Wirkung aus, während der Chromzusatz einem durch den Zirkoniumdioxidanteil hervorgerufenen Abfall der Härtewerte entgegenwirken kann. Der durch den Zusatz von Strontiumoxid zusätzlich gebildete Mischkristall der Formel $SrAl_{12-x}Cr_xO_{19}$ hat nun den zusätzlichen Effekt, daß er dem Sinterformkörper auch bei höherer Temperatur eine weiter verbesserte Zähigkeit verleiht. Die Verschleißfestigkeit dieser Sinterformkörper unter Einfluß erhöhter Temperatur ist daher ebenfalls verbessert. Auch bei dieser Ausführungsform hat sich das Ceroxid als besonders geeignet gezeigt.

Der in Ansprüchen und Beschreibung verwendete Begriff: Mischkristall ist nicht im Sinne von Einkristall zu verstehen, vielmehr ist damit gemeint eine feste Lösung von Chromoxid in Aluminiumoxid bzw. Strontiumaluminat. Der erfindungsgemäße Sinterformkörper ist polykristallin.

Gemäß einer weiteren Ausführungsform kann die Verschleißfestigkeit der Sinterformkörper noch durch die Einlagerung von 2 bis 25 Vol.% eines oder mehrerer Karbide, Nitride oder Karbonitride der Metalle der 4. und 5. Nebengruppe des periodischen Systems der Elemente - bezogen auf den Matrixwerkstoff - in diesen verbessert werden. Vorzugsweise liegt der Anteil dieser Hartstoffe bei 6 bis 15 Vol.%. Insbesondere sind Titannitrid, Titankarbid und Titankarbonitrid geeignet.

Gemäß einer besonders bevorzugten weiteren Ausführungsform der Erfindung wird das molare Verhältnis des die stabilisierenden Oxide enthaltenden Zirkoniumdioxids zu Chromoxid in Abhängigkeit des in den erfindungsgemäßen Sinterformkörpern vorliegenden Zirkoniumdioxidanteils so eingestellt, daß bei niedrigen Zirkoniumdioxidanteilen auch geringe Chromoxidmengen vorliegen. Ganz besonders hat sich dabei eine Einstellung des molaren Verhältnisses Zirkoniumdioxid : Chromoxid erwiesen, die im Bereich von

2 bis 5 Vol.% Zirkoniumdioxid 1.000 : 1 bis 100 : 1
> 5 - 15 Vol.% Zirkoniumdioxid 200 : 1 bis 40 : 1
>15 - 30 Vol.% Zirkoniumdioxid 100 : 1 bis 20 : 1

>30 - 40 Vol.% Zirkoniumdioxid 40 : 1 bis 20 : 1 beträgt.

Zum Vorliegen der Einstellung des Zirkoniumdioxids überwiegend in der tetragonalen Modifikation ist erfindungsgemäß die Einstellung einer 2 µm nicht überschreitenden Korngröße des Zirkoniumdioxids erforderlich. Außer den bis zu einer Menge von 5 Vol.% zugelassenen Anteilen von Zirkoniumdioxid in kubischer Modifikation sind auch noch geringe Mengen der monoklinen Modifikation zugelassen, diese sollen aber ebenfalls eine Menge von max. 5 Vol.% nicht überschreiten und liegen vorzugsweise bei weniger als 2 Vol.%, ganz besonders bevorzugt sogar bei weniger als 1 Vol.%, so daß vorzugsweise mehr als 90 Vol.% in der tetragonalen Modifikation vorliegen.

Da der Sinterformkörper außer den in den Patentansprüchen angegebenen Komponenten lediglich noch in unvermeidbarer Weise eingeschleppte Verunreinigungen enthält, die gemäß einer weiteren vorzugsweisen Ausführungsform der Erfindung nicht mehr als 0,5 Vol.% betragen, besteht der Sinterformkörper lediglich aus dem Aluminiumoxid-Chromoxid-Mischkristall oder aus diesem Mischkristall und dem Mischkristall der Formel $SrAl_{12-x}Cr_xO_{19}$ sowie aus dem die stabilisierenden Oxide enthaltenden und in die Matrix aus den genannten Mischkristallen eingelagertem Zirkoniumdioxid. Weitere Phasen, wie z. B. Korngrenzphasen, die beim gemeinsamen Einsatz von Aluminiumoxid und Magnesiumoxid gebildet werden oder weitere kristalline Phasen, wie sie bei den aus dem Stand der Technik bekannten Zusätzen von Stoffen, wie $YNbO_4$ oder $YTaO_4$ entstehen und die einen nicht ausreichend hohen Erweichungspunkt aufweisen, liegen im Sinterformkörper nach der Erfindung nicht vor. Auch die aus dem Stand der Technik bekannten Oxide von Mn, Cu, Fe, die ebenfalls zur Ausbildung weiterer Phasen führen, bewirken einen erniedrigten Erweichungspunkt und haben eine geringe Kantenfestigkeit zur Folge. Der Einsatz dieser Werkstoffe ist daher bei der Erfindung ausgeschlossen.

Vorzugsweise liegt das Zirkoniumdioxid in einer Menge von nicht mehr als 30 Vol.% vor. Vorzugsweise liegt das Zirkoniumdioxid auch nicht in einer Menge von weniger als 15 Vol.% vor. Liegen zwischen 15 und 30 Vol.% Zirkoniumdioxid vor, liegt das molare Verhältnis zwischen dem die stabilisierenden Oxide enthaltenden Zirkoniumdioxid und Chromoxid ganz besonders bevorzugt zwischen 40 : 1 und 25 : 1.

Gemäß einer weiteren ganz besonders bevorzugten Ausführungsform liegt der Anteil des in tetragonaler Modifikation vorliegenden Zirkoniumdioxids bei mehr als 95 Vol.%, wobei lediglich bis zu 5 Vol.% insgesamt in der kubischen und/oder monoklinen Modifikation vorliegen. Ganz besonders bevorzugt ist die Einhaltung einer Korngröße des eingelagerten Zirkoniumdioxids im Bereich von 0,2 bis 1,5 µm. Demgegenüber hat sich eine durchschnittliche Korngröße des Aluminiumoxid-/Chromoxid-Mischkristalls im Bereich von 0,8 bis 1,5 µm als besonders geeignet erwiesen. Kommen zusätzlich noch Karbide, Nitride und Karbonitride der Metalle der 4. und 5. Nebengruppe des PSE zum Einsatz, werden diese in einer Korngröße von 0,8 bis 3 µm eingesetzt. Die Körner des Mischkristalls der Formel $SrAl_{12-x}Cr_xO_{19}$ weisen ein Längen/Dickenverhältnis im Bereich von 5 : 1 bis 15 : 1 auf. Ihre Maximallänge beträgt dabei 12 µm, ihre Maximaldicke 1,5 µm.

Die Vickershärte der erfindungsgemäßen Sinterformkörper ist größer als 1.750 [ $HV_{0,5}$], liegt aber vorzugsweise bei mehr als 1.800 [ $HV_{0,5}$].

Die Mikrostruktur der erfindungsgemäßen Sinterformkörper ist frei von Mikrorissen und weist einen Porositätsgrad von nicht mehr als 1,0 % auf. Der Sinterformkörper kann ferner noch Whisker, jedoch nicht aus Siliziumkarbid, enthalten.

Der Sinterformkörper enthält keine der vielfach als Kornwachstumshemmer verwendeten Substanzen, wie z. B. Magnesiumoxid.

Beim Sintern lösen sich die Stabilsatoroxide im $ZrO_2$-Gitter und stabilisieren dessen tetragonale Modifikation. Zur Herstellung der Sinterformkörper und zur Erzielung einer von weiteren unerwünschten Phasen freien Gefügestruktur werden vorzugsweise hochreine Rohstoffe eingesetzt, d. h. Aluminiumoxid und Zirkoniumdioxid mit einer Reinheit von mehr als 99 %. Vorzugsweise ist der Grad der Verunreinigungen noch wesentlich geringer. Insbesondere sind $SiO_2$-Anteile von mehr als 0,5 Vol.%, bezogen auf den fertigen Sinterformkörper, unerwünscht. Ausgenommen von dieser Regelung ist das unvermeidbare Vorliegen von Hafniumoxid in geringer Menge von bis zu 2 Gew.% innerhalb des Zirkoniumdioxids.

Die Herstellung des erfindungsgemäßen Sinterformkörpers erfolgt durch druckloses Sintern oder Heißpressen einer Mischung aus Aluminiumoxid/Zirkoniumdioxid/Chromoxid und stabilisierenden Oxiden bzw. kommt eine Mischung dieser Komponenten zum Einsatz, der zusätzlich noch Strontiumoxid und/oder eins oder mehrere Nitride, Karbide und Karbonitride der 4. und 5. Nebengruppe des PSE zugefügt sind. Die Zugabe von Yttriumoxid und Chromoxid kann auch in Form von Yttriumchromoxid ($YCrO_3$) erfolgen, während die Strontiumoxidzugabe vorzugsweise in Form von Strontiumsalzen, insbesondere als Strontiumcarbonat ($SrCO_3$) vorgenommen werden kann. Der Begriff druckloses Sintern umfaßt dabei sowohl ein Sintern unter atmosphärischen Bedingungen, als auch unter Schutzgas oder im Vakuum. Vorzugsweise wird der geformte Körper zunächst auf 90 bis 95 % theoretischer Dichte drucklos vorgesintert und anschließend durch heißisostatisches Pressen oder Gasdrucksintern nachverdichtet. Die theoretische Dichte kann dadurch bis auf einen Wert von mehr als 99,5 % gesteigert werden.

Vorzugsweise Anwendungsbereiche des Sinterformkörpers liegen in seiner Verwendung als Schneidwerkzeug zum Schneiden von Papier, Textilgut und von Folien, besonders bevorzugt ist jedoch die Verwendung des Sinterformkörpers als Schneidplatte für die spanabhebende Bearbeitung von Gußeisen oder von Stahlwerkstoffen, insbesondere im unterbrochenen Schnitt. Darunter ist zu verstehen, daß am Werkstück viele kleine glatte Schnitte zeitlich aufeinanderfolgend durchgeführt werden, wobei sich die Schneidplatte während des Eingriffs mit dem zu bearbeitenden Werkstück stark erhitzt und vor dem nächstfolgenden Eingriff kurz abkühlt, so daß eine thermische Wechselbelastung der Schneidplatte erfolgt.

Die nachfolgenden Beispiele dienen der Erläuterung der Erfindung.

<u>Beispiele 1 bis 18 und Vergleichsbeispiele:</u>

Verschiedene keramische Mischungen wurden durch Mischmahlung hergestellt. Den gemahlenen Mischungen wurde ein temporäres Bindemittel zugegeben und die Mischungen anschließend sprühgetrocknet. Anschließend wurden aus den sprühgetrockneten Mischungen Grünkörper gepreßt und diese entsprechend den Angaben in der Tabelle entweder drucklos gesintert oder vorgesintert und unter Argon einem Gasdrucksinterprozeß unterworfen. In Tabelle 1 sind die errechneten Zusammensetzungen der hergestellten Sinterformkörper angegeben.

Der in der letzten Querspalte von Tabelle 1 angegebene Matrixanteil in Vol.% umfaßt alle Anteile der angegebenen Zusammensetzung mit Ausnahme des Zirkoniumdioxids und der stabilisierenden Oxide.

In Tabelle 2 sind die Untersuchungsergebnisse der Beispiele lt. Tabelle 1 zusammengefaßt.

In den Tabellen bedeutet:

| | |
|---|---|
| A: | drucklos gesintert |
| B: | drucklos vorgesintert, nach dem Vorsintern unter Argon gasdruckgesintert. |
| D: | prozentuale Dichte im Vergleich zur theoretischen Dichte |
| E: | Elastizitätsmodul |
| $\sigma_{4B}$: | Biegebruchfestigkeit, gemessen nach der 4 Punkt Methode, (DIN 51110) |
| $K_{Ic}$: | Bruchzähigkeit |
| $HV_{0,5}$: | Vickershärte, gemessen nach DIN 50113 |
| $\sigma_{3B1.200}$ oC: | Biegebruchfestigkeit bei 1.200 °C, nach der 3 Punkt Methode gemessen |
| $\sigma_{3B\ RT}$: | Biegebruchfestigkeit bei Raumtemperatur, nach der 3 Punkt Methode gemessen, (Vergleichswert zur Biegebruchfestigkeit $\sigma_{3B1.200}$ oC). |

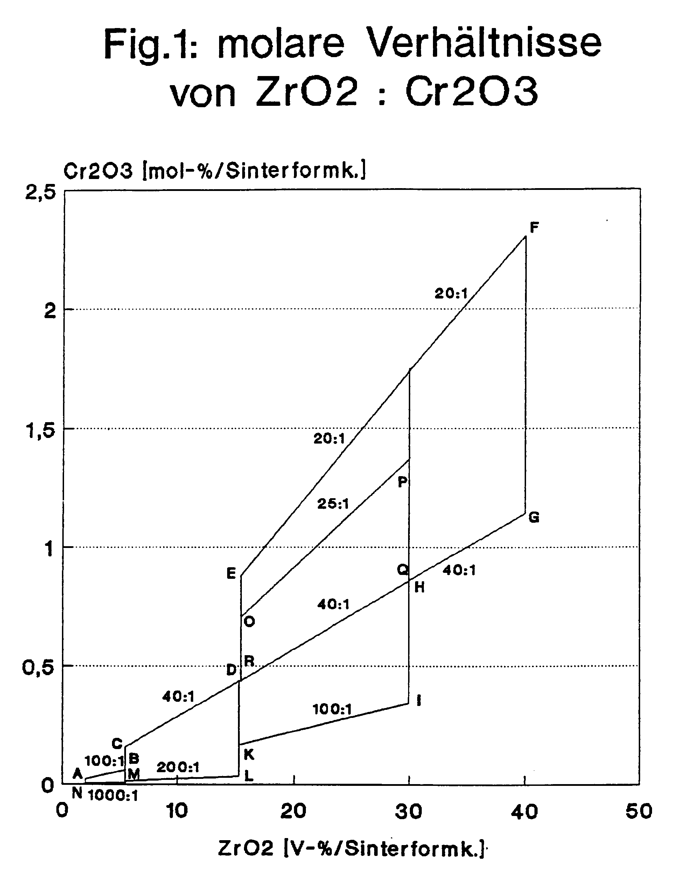

Figur 1 zeigt in graphischer Darstellung das gemäß der vorliegenden Erfindung vorzugsweise einzustellende molare Verhältnis von $ZrO_2 : Cr_2O_3$, das einer Fläche entspricht, die durch die Punkte A, B, C, D, E, F, G, H, I, K, L, M und N definiert ist. Gemäß einer ganz besonders bevorzugten Ausführungsform der Erfindung, bei der das Zirkoniumdioxid in einer Menge von 15 bis 30 Vol.% vorliegt, ist das molare Verhältnis zwischen Zirkoniumdioxid und Chromoxid durch die Fläche bestimmt, die durch das Viereck mit den Punkten 0, P, R und Q definiert ist.

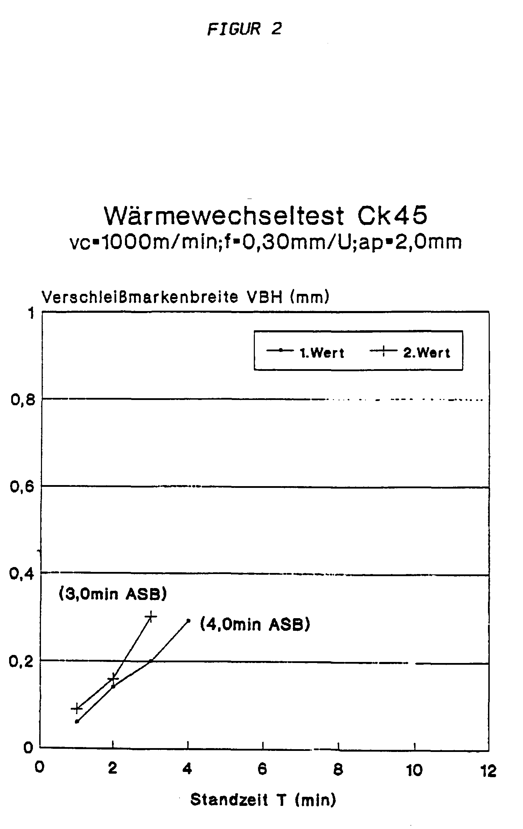

Die Figuren 2 bis 4 zeigen in graphischer Form die Ergebnisse eines Schneidplatten-Wärmewechseltests. In Figur 2 ist das Ergebnis einer Untersuchung an einer kommerzialisierten Schneidplatte festgehalten, bei der tetragonales Zirkoniumdioxid in eine Aluminiumoxidmatrix bei gleichzeitiger Mitverwendung von Magnesiumoxid eingelagert ist.

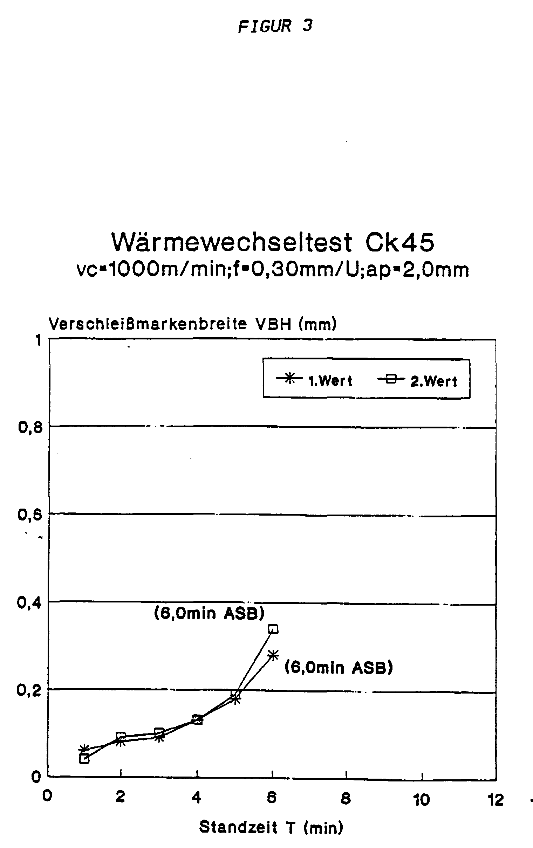

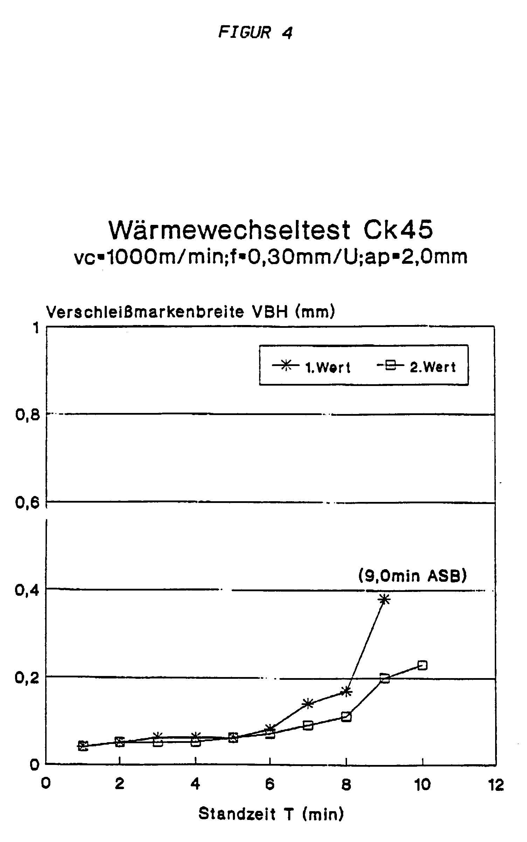

Figur 3 entspricht dem Beispiel 11 und Figur 4 Beispiel 12.

In den Figuren 2 bis 4 bedeuten:

| | |
|---|---|
| Ck 45: | Stahlwerkstoff |
| vc: | Schnittgeschwindigkeit |
| f: | Vorschub |
| ap: | Schnittiefe |
| ASB: | bezeichnet den Zeitpunkt, zu dem Ausbröckelungen nicht größer als die Verschleißmarkenbreite erfolgen. |

Die den Figuren 3 bis 4 zu entnehmenden Ergebnisse belegen eine erheblich verbesserte Verschleißbeständigkeit von Sinterformkörpern, wenn sie gemäß der vorliegenden Erfindung als Schneidplatten eingesetzt werden im Vergleich zu bekannten Standardschneidplatten.

Die Figuren 5 bis 7 zeigen Mikrofotos an Schneidplattenkanten nach dem zu den Figuren 2 bis 4 beschriebenen Wärmewechseltest, wobei die Figuren 5 und 6 den Zustand nach einer Eingriffzeit von 4 Minuten und Figur 7 nach 10 Minuten zeigen. Figur 5 entspricht Beispiel 2; Figur 6 dem Beispiel 10 und Figur 7 entspricht Beispiel 12.

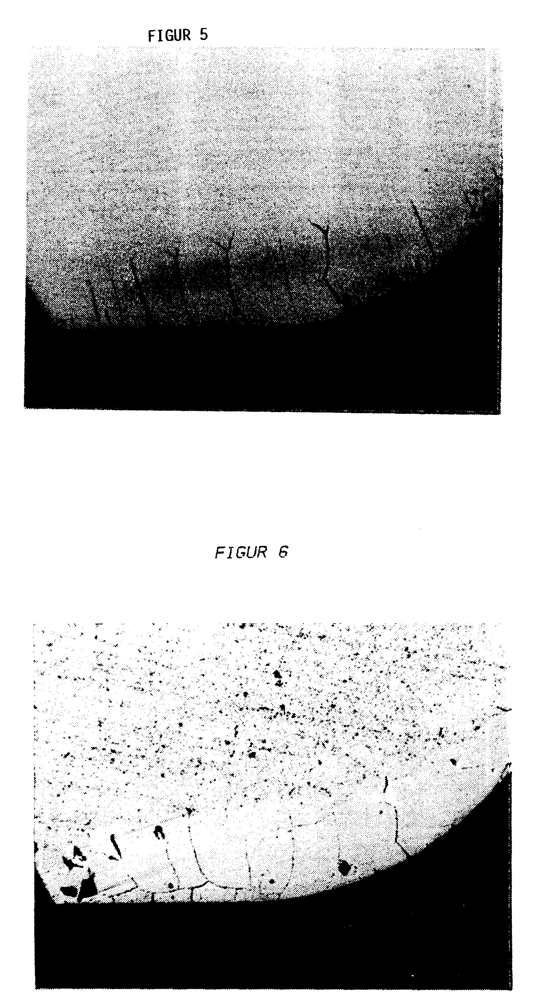

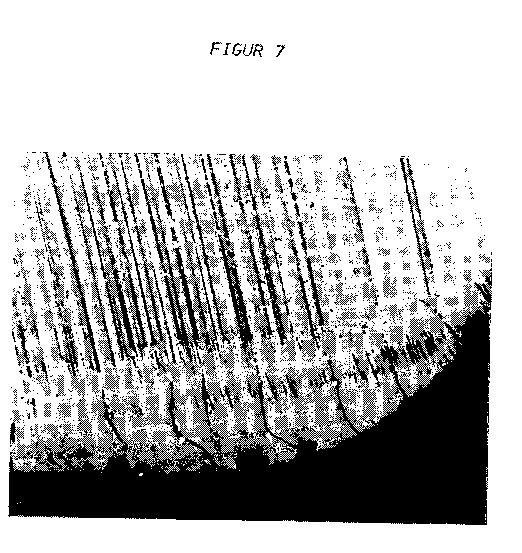

Während die Figuren 5 und 6 die Ausbildung weniger Längsrisse und andeutungsweise das Auftreten von Querrissen zeigen, ist aus Figur 7 das Auftreten von Querrissen nicht zu entnehmen. Daraus ist auf ein für die Praxis besonders günstiges Verschleißverhalten - auch bei Auftreten von Temperaturwechseln - zu schließen, da spontane Ausbrüche vermieden werden, wodurch sich die Fertigungssicherheit im Zerspanungsprozeß deutlich erhöht. Obwohl aus Figur 6 noch auf die vergleichsweise größte Querrißbildung zu schließen ist, zeigen die Untersuchungsergebnisse des der Figur 6 zugrundeliegenden Beispiels 10 eine enorm hohe Bruchzähigkeit bei gleichzeitig hoher Härte und Biegebruchfestigkeit, so daß Sinterformkörper aus diesem Werkstoff hervorragend für Schneidanwendungen bei im Vergleich zu den vorbeschriebenen Wärmewechseltests etwas niedrigeren Temperaturwechselbelastungen geeignet sind.

EP 0 542 815 B1

Tabelle 1

| Gew.% | V-Bsp.1 | V-Bsp.2 | Bsp.1 | Bsp.2 | Bsp.3 | Bsp.4 | Bsp.5 | Bsp.6 | Bsp.7 | Bsp.8 | Bsp.9 | Bsp.1o |
|---|---|---|---|---|---|---|---|---|---|---|---|---|
| $Al_2O_3$ | 75 | 73,52 | 74,13 | 74,13 | 64,4 | 64,4 | 63,80 | 94,93 | 74,1 | 74,1 | 64,1 | 64,1 |
| $Cr_2O_3$ | – | – | o,87 | o,87 | o,59 | o,59 | 1,22 | 0,05 | o,9 | 0,9 | 0,9 | 0,9 |
| $SrO$ | – | – | – | – | – | – | – | – | – | – | – | – |
| $ZrO_2$ | 23,7 | 23,67 | 23,7 | 23,7 | 34,1 | 34,1 | 33,15 | 4,76 | 21,o | 21,o | 29,4 | 29,4 |
| $Y_2O_3$ | 1,3 | 1,29 | 1,3 | 1,3 | o,91 | 0,91 | 1,83 | 0,26 | – | – | – | – |
| $CeO_2$ | – | – | – | – | – | – | – | – | 4,0 | 4,0 | 5,6 | 5,6 |
| $Pr_2O_3$ | – | – | – | – | – | – | – | – | – | – | – | – |
| $TiN$ | – | – | – | – | – | – | – | – | – | – | – | – |
| $Nb_2O_5$ | | 1,52 | – | – | – | – | – | – | – | – | – | – |
| Sinterverfahren | A | B | A | B | A | B | B | B | A | B | A | B |
| Vol.% Matrix | 81,7 | 81,7 | 81,6 | 81,6 | 73,5 | 73,5 | 73,3 | 96,6 | 82,2 | 82,2 | 74,1 | 74,1 |

Tabelle 1          Fortsetzung

| Bsp.11 | Bsp.12 | Bsp.13 | Bsp.14 | Bsp.15 | Bsp.16 | Bsp.17 | Bsp.18 |
|--------|--------|--------|--------|--------|--------|--------|--------|
| 73,53 | 73,53 | 58,68 | 73,8o | 85 | 67,13 | 74,42 | 63,8 |
| o,86 | o,86 | 1,2o | o,4o | o,1o | o,87 | o,55 | 0,79 |
| o,79 | o,79 | o,12 | o,8 | 4,69 | o,69 | – | 0,64 |
| 23,53 | 23,53 | 38,2o | 23,21 | 8,58 | 23,7o | 18,33 | 29,21 |
| 1,29 | 1,29 | 1,8o | 0,11 | – | 1,3o | – | – |
| – | – | – | 1,68 | 1,63 | – | – | 5,56 |
| – | – | – | – | – | – | 6,70 | |
| – | – | – | – | – | 6,31 | – | |
| – | – | – | – | – | – | – | |
| A | B | B | B | B | B | B | B |
| 81,8 | 81,8 | 69 | 82 | 93,1 | 81,3 | 82,4 | 74,3 |

EP 0 542 815 B1

Tabelle 2

| | V-Bsp.1 | V-Bsp.2 | Bsp.1 | Bsp. 2 | Bsp.3 | Bsp.4 | Bsp.5 | Bsp.6 | Bsp.7 | Bsp.8 | Bsp.9 | Bsp.10 |
|---|---|---|---|---|---|---|---|---|---|---|---|---|
| D [%] | 99,1 | 99,5 | 99,3 | 99,8 | 98,0 | 99,1 | 99,7 | 100,0 | 99,6 | 100 | 98,1 | 99,5 |
| E [GPa] | 341 | 334 | 353 | 355 | 327 | 333 | 348 | 389 | 336 | 352 | 326 | 335 |
| $\sigma_{4B}$ [MPa] | 563 | 511 | 572 | 689 | 613 | 720 | 829 | 464 | 691 | 812 | 572 | 600 |
| $K_{IC}$ [MPa$\sqrt{m}$] | 4,92 | 5,81 | 5,4 | 6,1 | 6,5 | 6,8 | 5,7 | 4,4 | 6,6 | 7,3 | 6,7 | 11,3 |
| $HV_{0,5}$ | 1692 | 1561 | 1990 | 2045 | 1771 | 1955 | 2021 | 2102 | 1892 | 1952 | 1860 | 1821 |
| $\sigma_{3B}$ RT | | | | | | | | | | | | 990 |
| $\sigma_{3B}$ 1.200 $^{\circ}$C | | | | 430 | | 362 | | | | 505 | | 645 |

EP 0 542 815 B1

Fortsetzung

Tabelle 2

| | Bsp.11 | Bsp.12 | Bsp.13 | Bsp.14 | Bsp.15 | Bsp.16 | Bsp.17 | Bsp.18 |
|---|---|---|---|---|---|---|---|---|
| | 99,3 | 99,8 | 99,5 | 99,7 | 99,8 | 99,7 | 99,6 | 99,7 |
| | 339 | 338 | 317 | 342 | 363 | 374 | 342 | 319 |
| | 474 | 575 | 807 | 793 | 627 | 617 | 584 | – |
| | 5,8 | 4,8 | 7,1 | 6,4 | 6,1 | 6,0 | 5,7 | 15,7 |
| | 1829 | 1951 | 1827 | 1927 | 1948 | 2067 | 1897 | 1830 |
| | – | 897 | | | | | | |
| | – | 400 | | | | | | |

## Patentansprüche

1. Sinterformkörper aus:
   a) 60 bis 98 Vol.% eines Matrixwerkstoffes, gebildet aus einem Aluminiumoxid-/Chromoxid-Mischkristall,
   b) 2 bis 40 Vol.% in den Matrixwerkstoff eingelagertem Zirkoniumdioxid, das
   c) als stabilisierende Oxide mehr als 10 bis 15 Mol.% eines oder mehrerer der Oxide von Cer, Praseodym und Terbium und/oder 0,2 bis 3,5 Mol.% Yttriumoxid, bezogen auf die Mischung aus Zirkoniumdioxid und stabilisierenden Oxiden, enthält, wobei
   d) die Zugabemenge der stabilisierenden Oxide so gewählt ist, daß das Zirkoniumdioxid zu mehr als 90 Vol.% in der tetragonalen Modifikation vorliegt und
   e) das molare Verhältnis zwischen dem die stabilisierenden Oxide enthaltenden Zirkoniumdioxid und Chromoxid 1.000 : 1 bis 20 : 1 beträgt,

f) sich die Anteile aller Komponenten zu 100 Vol.% des Sinterformkörpers ergänzen,

g) das Zirkoniumdioxid eine 2 μm nicht überschreitende Korngröße aufweist.

2. Sinterformkörper nach Anspruch 1 aus:

a) mindestens 70 Vol.% eines Matrixwerkstoffes, gebildet aus einem Aluminiumoxid-/Chromoxid-Mischkristall mit einem Chromoxidanteil von 0,01 bis 2,32 Gew.%, bezogen auf Aluminiumoxid,

b) 2 bis 30 Vol.% in die Matrix eingelagertem Zirkoniumdioxid, das

c) 0,27 bis 2,85 Mol.% Yttriumoxid, bezogen auf die Mischung aus Zirkoniumdioxid und Yttriumoxid, enthält, wobei die Zugabemenge des Yttriumoxids so gewählt ist, daß das Zirkoniumdioxid zu mehr als 90 Vol % in der tetragonalen Modifikation vorliegt und

d) das Zirkoniumdioxid in einer 2 μm nicht überschreitenden durchschnittlichen Korngröße vorliegt und

e) das molare Verhältnis zwischen dem die stabilisierenden Oxide enthaltenden Zirkoniumdioxid und Chromoxid 1.000 : 1 bis 20 : 1 beträgt und

f) sich die Anteile aller Komponenten zu 100 Vol.% des Sinterformkörpers ergänzen.

3. Sinterformkörper nach Anspruch 2, wobei das molare Verhältnis zwischen dem die stabilisierenden Oxide enthaltenden Zirkoniumdioxid und Chromoxid 370 : 1 bis 34 : 1 beträgt.

4. Sinterformkörper aus:

a1) 60 bis 98 Vol.% eines Matrixwerkstoffes, wobei dieser zu

a2) 67,1 bis 99,2 Vol.% aus einem Aluminiumoxid-/Chromoxid-Mischkristall

a3) zu 0,8 bis 32,9 Vol.% aus einem Mischkristall der Formel $SrAl_{12-x} Cr_x O_{19}$ besteht, wobei x einem Wert von 0,0007 bis 0,045 entspricht,

b) 2 bis 40 Vol.% in den Matrixwerkstoff eingelagertem Zirkoniumdioxid, das

c) als stabilisierende Oxide mehr als 10 bis 15 Mol.% eines oder mehrerer der Oxide von Cer, Praseodym und Terbium und/oder 0,2 bis 3,5 Mol.% Yttriumoxid, bezogen auf die Mischung aus Zirkoniumdioxid und stabilisierenden Oxiden enthält, wobei

d) die Zugabemenge der stabilisierenden Oxide so gewählt ist, daß das Zirkoniumdioxid zu mehr als 90 Vol.% in der tetragonalen Modifikation vorliegt und

e) das molare Verhältnis zwischen dem die stabilisierenden Oxide enthaltenden Zirkoniumdioxid und Chromoxid 1.000 : 1 bis 20 : 1 beträgt,

f) sich die Anteile der Komponenten zu 100 Vol.% des Sinterformkörpers ergänzen und

g) das Zirkoniumdioxid eine 2 μm nicht überschreitende Korngröße aufweist,

5. Sinterformkörper nach einem der Ansprüche 1 oder 2, wobei der Matrixwerkstoff außerdem noch 2 bis 25 Vol.% eines oder mehrere der Karbide, Nitride und Carbonitride der Metalle der vierten und fünften Nebengruppe des PSE - bezogen auf Matrixwerkstoff - enthält.

6. Sinterformkörper nach Anspruch 4, wobei der Matrixwerkstoff außerdem noch 2 bis 25 Vol.% eines oder mehrere der Karbide, Nitride und Carbonitride der Metalle der vierten und fünften Nebengruppe des PSE - bezogen auf Matrixwerkstoff - enthält.

7. Sinterformkörper nach einem der Ansprüche 1, 2, 4 oder 6 mit einem molaren Verhältnis des die stabilisierenden Oxide enthaltenden Zirkoniumdioxids zu Chromoxid, das im Bereich von

2 - 5 Vol.% Zirkoniumdioxid 1.000:1 - 100:1

> 5 - 15 Vol.% Zirkoniumdioxid 200:1 - 40:1

> 15 - 30 Vol.% Zirkoniumdioxid 100:1 - 20:1

> 30 - 40 Vol.% Zirkoniumdioxid 40:1 - 20:1

beträgt.

8. Sinterformkörper nach einem der Ansprüche 1. 4, 5 oder 6 und nach Anspruch 7 mit einer Zirkoniumdioxidmenge von nicht mehr als 30 Vol.%.

9. Sinterformkörper nach einem der Ansprüche 1, 2, 4, 5 oder 6 und nach den Ansprüchen 7 und 8, wobei das Zirkoniumdioxid zu mindestens 95 Vol.% die tetragonale Modifikation aufweist.

10. Sinterformkörper nach einem der Ansprüche 1, 2, 4, 5 oder 6 und nach den Ansprüchen 7 bis 9, wobei das Zirkoniumdioxid insgesamt zu 0 bis 5 Vol.% in der kubischen und/oder monoklinen Modifikation vorliegt.

**11.** Sinterformkörper nach einem der Ansprüche 1, 2, 4, 5 oder 6 und nach den Ansprüchen 7 bis 10 mit einer durchschnittlichen Korngröße des Aluminiumoxid-/Chromoxid-Mischkristalls von 0,8 bis 1,5 μm.

**12.** Sinterformkörer nach einem der Ansprüche 1, 2, 4, 5 oder 6 und nach den Ansprüchen 7 bis 11 mit einer Körngröße des Zirkoniumdioxids zwischen 0,2 und 1,5 μm.

**13.** Sinterformkörper nach einem der Ansprüche 1, 2, 4, 5 oder 6 und nach den Ansprüchen 7 bis 12 mit nicht mehr als 0,5 Vol.% unvermeidbarer Verunreinigungen, bezogen auf den Sinterformkörper.

**14.** Sinterformkörper nach einem der Ansprüche 1, 2, 4, 5 oder 6 und nach den Ansprüchen 7 bis 13 mit einer Härte nach Vickers [ Hv 0,5] > 1.800.

**15.** Verwendung eines Sinterformkörpers nach einem der Ansprüche 1 bis 14 als Schneidwerkzeug zum Schneiden von Papier, Textilgut und von Folien.

**16.** Verwendung eines Sinterformkörpers nach einem der Ansprüche 1 bis 14 als Schneidplatte für die spanabhebende Bearbeitung von Gußeisen oder von Stahlwerkstoffen.

**17.** Verwendung eines Sinterformkörpers nach einem der Ansprüche 1 bis 14 als Schneidplatte für den unterbrochenen Schnitt von Gußeisen und Stahlwerkstoffen.

## Claims

**1.** Sintered moulding formed of:
a) 60 to 98 % of a matrix material formed from an aluminium oxide/chromium oxide-mixed crystal
b) 2 to 40 % by volume of zirconium oxide embedded in the matrix material which
c) contains, as stabilising oxide, more than 10 to 15 mol % of one or several of the oxides of cerium, praseodymium and terbium and/or 0.2 to 3.5 mol & of yttrium oxide, related to the mixture of zirconium dioxide and stabilising oxides, with
d) the added amount of stabilising oxides being so selected that the zirconium dioxide is present up to more than 90 vol % in the tetragonal modification, and
e) the molar ratio between the zirconium oxide and chromium oxide containing the stabilising oxides amounting to 1,000 to 20 : 1,
f) the amounts of all components complementing one another to 100 vol % of the sintered moulding,
g) the zirconium dioxide having a particle size not exceeding 2 μm.

**2.** Sintered moulding according to claim 1, formed of:
a) at least 70 vol % of a matrix material formed from an aluminium oxide/chromium oxide mixed crystal with a chromium oxide content of 0.01 to 2.32 wt. % related to aluminium oxide,
b) 2 to 30 vol % of zirconium dioxide embedded in the matrix, which
c) contains 0.27 to 2.85 mol & of yttrium oxide related to the mixture of zirconium oxide and yttrium oxide, with the added amount of yttrium oxide being so chosen that the zirconium dioxide is present in the tetragonal modification up to more than 90 vol %, and
d) the zirconium dioxide is present in an average particle size not exceeding 2 μm and
e) the molar ratio between the zirconium dioxide and chromium dioxide containing the stabilising oxides amounts to 1,000 : 1 to 20 : 1 and
f) the amounts of all components complement one another to 100 vol % of the sintered moulding.

**3.** Sintered moulding according to claim 2 wherein the molar ratio between the zirconium dioxide and chromium oxide containing the stabilising oxides amounts to 370 : 1 to 34 : 1.

**4.** Sintered moulding formed of:
a1) 60 to 98 % of a matrix material, with this consisting
a2) to 67.1 to 99.2 vol % of an aluminium oxide/chromium oxide mixed crystal.
a3) to 0.8 to 32.9 vol % of a mixed crystal of the formula $SrAl_{12-x}Cr_xO_{19}$, with x correspondingly to a value of 0.0007 to 0.045,
b) 2 to 40 vol % of zirconium oxide embedded in the matrix material, which
c) contains as stabilising oxide more than 10 to 15 mol % of one or several of the oxides of cerium, praseodymium and terbium and/or 0.2 to 3.5 mol % of yttrium oxide, related to the mixture of zirconium oxide and stabilising oxides, with

d) the added amount of the stabilising oxide being so chosen that the zirconium dioxide is present in up to more than 90 mol % in the tetragonal modification and

e) the molar ratio between the zirconium dioxide and chromium oxide containing the stabilising oxides amounting to 1,000 : 1 to 20 : 1,

f) the amounts of all components complementing one another to 100 vol % of the sintered moulding,

g) the zirconium dioxide having a particle size not exceeding 2 $\mu$m.

5. Sintered moulding according to one of claims 1 or 2, wherein the matrix material contains in addition 2 to 25 vol %, related to the matrix material of one or several of the carbides, nitrides and carbonitrides of the metals of the fourth and fifth sub-groups of the periodic system of the elements.

6. Sintered moulding according to claim 4, wherein the matrix material contains in addition 2 to 25 vol % related to the matrix material of one or several of the carbides, nitrides and carbonitrides of the metals of the fourth and fifth sub-groups of the periodic system of the elements.

7. Sintered moulding according to one of claims 1, 2, 4 or 6 with a molar ratio of the zirconium dioxide containing the stabilising oxides to chromium dioxide which amounts to the region of

2 - 5 vol % zirconium dioxide 1, 000:1 - 100:1

> 5 - 15 vol % zirconium dioxide 200:1 - 40:1

> 15 - 30 vol % zirconium dioxide 100:1 - 20:1

> 30 - 40 vol % zirconium dioxide 40:1 - 20:1

8. Sintered moulding according to one of claims 1, 4, 5 or 6 and according to claim 7 with a zirconium dioxide amount of not more than 30 vol %.

9. Sintered moulding according to one of claims 1, 2, 4, 5 or 6 and according to claims 7 and 8, wherein the zirconium dioxide is at least 95 vol % in the tetragonal modification.

10. Sintered moulding according to one of claims 1, 2, 4, 5 or 6 and according to claims 7 to 9, wherein the zirconium dioxide is present in the cubic and/or monoclinic modification in a total of 0 to 5 vol %.

11. Sintered moulding according to one of claims 1, 2, 4, 5 or 6 and according to claim 7 to 10 with an average particle size of the aluminium oxide/chromium oxide mixed crystal of 0.1 to 1.5 $\mu$m.

12. Sintered moulding according to one of claims 1, 2, 4, 5 or 6 and according to claims 7 to 11 with a particle size of the zirconium dioxide between 0.2 and 1.5 $\mu$m.

13. Sintered moulding according to one of claims 1, 2, 4, 5 or 6 and according to claims 7 to 12 with not more than 0.5 vol % of unavoidable impurities, related to the sintered moulding.

14. Sintered moulding according to one of claims 1, 2, 4, 5 or 6 and according to claim 7 to 13 with Vickers hardness [Hv 0.5] > 1,800.

15. Use of a sintered moulding according to one of claims 1 to 14 as cutting tool for the cutting of paper, textiles and foils.

16. Use of a sintered moulding according to one of claims 1 to 14 as cutting plate for the machine working of cast iron or of steel materials.

17. Use of a sintered moulding according to one of claims 1 to 4 as cutting plate for the interrupted cutting of cast iron and steel materials.

**Revendications**

1. Pièce frittée contenant:

a) de 60 à 98 % en volume d'un matériau formant une matrice, constitué d'une solution solide d'oxyde d'aluminium et d'oxyde de chrome,

b) de 2 à 40 % en volume de dioxyde de zirconium inclu dans le matériau formant la matrice, contenant

c) comme oxydes stabilisants, plus de 10 à 15 % en moles d'un ou plusieurs des oxydes de cérium, de praséodyme ou de terbium et/ou 0,2 à 3,5 % en moles d'oxyde d'yttrium, exprimé par rapport au mélange fait de dioxyde de zirconium et d'oxydes stabilisants,

d) la quantité d'oxydes stabilisants ajoutée étant choisie de façon à ce que le dioxyde de zirconium se trouve à plus de 90 % en moles sous forme de variété tétragonale, et

e) le rapport molaire du dioxyde de zirconium, contenant les oxydes stabilisants à l'oxyde de chrome, étant compris entre 1 000 : 1 et 20 : 1,

f) les fractions de tous les composants se complétant pour donner 100 % en volume de la pièce frittée,

g) le dioxyde de zirconium présentant une taille de particules n'excédant pas 2 μm.

2.  Pièce frittée conforme à la revendication 1, contenant :

a) au moins 70 % en volume d'un matériau formant une matrice, constitué d'une solution solide d'oxyde d'aluminium et d'oxyde de chrome, avec une proportion d'oxyde de chrome de 0,01 à 2,32 % en poids par rapport à l'oxyde d'aluminium,

b) de 2 à 30 % en volume de dioxyde de zirconium inclu dans le matériau de la matrice, contenant

c) de 0,27 à 2,85 % en moles d'oxyde d'yttrium, par rapport au mélange de dioxyde de zirconium et d'oxyde d'yttrium, la quantité d'oxyde d'yttrium ajoutée étant choisie de façon à ce que le dioxyde de zirconium se trouve à plus de 90 % en mole sous forme de variété tétragonale, et

d) le dioxyde de zirconium présentant une taille moyenne de particules n'excédant pas 2 μm.

e) le rapport molaire du dioxyde de zirconium, contenant les oxydes stabilisants, à l'oxyde de chrome étant compris entre 1 000 : 1 et 20 : 1, et

f) les fractions de tous les composants se complétant pour donner 100 % en volume de la pièce frittée.

3.  Pièce frittée conforme à la revendication 2, pour laquelle le rapport molaire du dioxyde de zirconium, contenant les oxydes stabilisants, à l'oxyde de chrome étant compris entre 370 : 1 et 34 : 1.

4.  Pièce frittée contenant :

a1) de 60 à 98 % en volume d'un matériau formant une matrice, lui même constitué

a2) de 67,1 à 99,2 % en volume d'une solution solide d'oxyde d'aluminium et d'oxyde de chrome,

a3) de 0,8 à 32,9 % en volume d'une solution solide de formule $SrAl_{12-x}Cr_xO_{19}$, x valant entre 0,0007 et 0,045,

b) de 2 à 40 % en volume de dioxyde de zirconium inclu dans le matériau de la matrice, contenant

c) comme oxydes stabilisants, plus de 10 à 15 % en moles d'un ou plusieurs des oxydes de cérium, de praséodyme ou de terbium et/ou 0,2 à 3,5 % en moles d'oxyde d'yttrium, exprimé par rapport au mélange fait de dioxyde de zirconium et d'oxydes stabilisants,

d) la quantité d'oxydes stabilisants ajoutée étant choisie de façon à ce que le dioxyde de zirconium se trouve à plus de 90 % en mole sous forme de variété tétragonale, et

e) le rapport molaire du dioxyde de zirconium, contenant les oxydes stabilisants, à l'oxyde de chrome étant compris entre 1 000 : 1 et 20 : 1,

f) les fractions de tous les composants se complétant pour donner 100 % en volume de la pièce frittée, et

g) le dioxyde de zirconium présentant une taille de particules n'excédant pas 2 μm.

5.  Pièce frittée conforme à une des revendications 1 ou 2, dans laquelle le matériau de la matrice contient en plus 2 à 25 % en volume, par rapport au matériau de la matrice, d'un ou de plusieurs carbures, nitrures et carbonitrures de métaux du quatrième et cinquième groupe de la classification périodique des éléments.

6.  Pièce frittée conforme à la revendication 4, dans laquelle le matériau formant la matrice contient en plus 2 à 25 % en volume, par rapport au matériau de la matrice, d'un ou de plusieurs carbures, nitrures et carbonitrures de métaux du quatrième et cinquième groupe de la classification périodique des éléments.

7.  Pièce frittée conforme à une des revendications 1, 2, 4 ou 6, pour laquelle le rapport molaire du dioxyde de zirconium, contenant les oxydes stabilisants, à l'oxyde de chrome est égal à

1000 : 1 - 100 : 1 pour 2 - 5 % en volume de dioxyde de zirconium,

200 : 1 - 40 : 1 pour plus de 5 - 15 % en volume de dioxyde de zirconium,

100 : 1 - 20 : 1 pour plus de 15-30 % en volume de dioxyde de zirconium,

40 : 1 - 20: 1 pour plus de 30 - 40 % en volume de dioxyde de zirconium.

8. Pièce frittée conforme à une des revendications 1, 4, 5 ou 6 et conforme à la revendication 7, avec une quantité de dioxyde de zirconium inférieure ou égale à 30 % en volume.

9. Pièce frittée conforme à une des revendications 1, 2, 4, 5 ou 6 et aux revendications 7 et 8, dans laquelle le dioxyde de zirconium est au moins à 95 % en volume sous forme de variété tétragonale.

10. Pièce frittée conforme à une des revendications 1, 2, 4, 5 ou 6 et aux revendications 7 à 9, dans laquelle entre 0 et 5 % en volume du dioxyde de zirconium sont sous forme de variété cubique et/ou monoclinique.

11. Pièce frittée conforme à une des revendications 1, 2, 4, 5 ou 6 et aux revendication 7 à 10, pour laquelle la solution solide d'oxyde d'aluminium et d'oxyde de chrome présente une taille moyenne de particules comprise entre 0,8 et 1,5 μm.

12. Pièce frittée conforme à une des revendications 1, 2, 4, 5 ou 6 et aux revendication 7 à 11, pour laquelle le dioxyde de zirconium présente une taille de particules comprise entre 0,2 et 1,5 μm.

13. Pièce frittée conforme à une des revendications 1, 2, 4, 5 ou 6 et aux revendications 7 à 12, contenant au plus 0,5 % en volume d'impuretés inévitables par rapport à la pièce frittée.

14. Pièce frittée conforme à une des revendications 1, 2, 4, 5 ou 6 et aux revendications 7 à 13, ayant une dureté Vickers [Hv 0,5] > 1 800.

15. Utilisation d'une pièce frittée conforme à une des revendications 1 à 14, comme outil coupant pour couper du papier, des textiles et des films.

16. Utilisation d'une pièce frittée conforme à une des revendications 1 à 14, comme matrice de découpage pour l'usinage par enlèvement de copeaux de fonte de fer ou de matériaux en acier.

17. Utilisation d'une pièce frittée conforme à une des revendications 1 à 14, comme matrice de découpage pour la découpe discontinue de fonte de fer ou de matériaux en acier.

# Fig.1: molare Verhältnisse von ZrO2 : Cr2O3

FIGUR 2

Wärmewechseltest Ck45
vc=1000m/min;f=0,30mm/U;ap=2,0mm

*FIGUR 3*

## Wärmewechseltest Ck45
### vc=1000m/min;f=0,30mm/U;ap=2,0mm

*FIGUR 4*

**Wärmewechseltest Ck45**
vc=1000m/min;f=0,30mm/U;ap=2,0mm

Verschleißmarkenbreite VBH (mm)

(9,0min ASB)

Standzeit T (min)

FIGUR 5

FIGUR 6

FIGUR 7